# EUROPEAN PATENT SPECIFICATION

(11) **EP 2 409 040 B1**
(45) Date of publication and mention of the grant of the patent: **06.03.2013**
(21) Application number: 10727449.0
(22) Date of filing: 16.03.2010
(51) Int. Cl.: F15B 1/02, F15B 21/14

(54) **HYDRAULIC ACTUATOR ARRANGEMENT AND A FLOW CONTROL DEVICE**
HYDRAULISCHE BETÄTIGERANORDNUNG UND STROEMSSTEUERRUNGVORRICHTUNG
APPAREILLAGE A ACTIONNEUR HYDRAULIQUE ET APPAREIL DE CONTROLE DU FLUIDE

(30) Priority: 18.03.2009 FI 20095276
(43) Date of publication of application: 25.01.2012
(73) Proprietor: Metso Paper, Inc., 00130 Helsinki (FI)
(72) Inventor: ENWALD, Petri, FI-04310 Tuusula (FI); JÄRVENSIVU, Markku, FI-37600 Valkeakoski (FI); KEMPPAINEN, Matti M., FI-05400 Jokela (FI); LESKINEN, Arto, FI-05450 Nukari (FI); VANTOLA, Pekka, FI-04380 Tuusula (FI); VIRTANEN, Timo, FI-02660 Espoo (FI); ÅKERLUND, Kenneth, FI-01100 Sipoo (FI)
(74) Representative: Ansala, Jyrki Matti
(86) International application number: PCT/FI2010/050197
(87) International publication number: WO 2010/106226

(56) References cited:
- EP-A1- 0 525 547
- DE-A1-102006 043 628

## Description

The object of the present invention is a hydraulic actuator arrangement according to the preamble of patent claim 1, comprising a hydraulic actuator and a control device for controlling the flow of the hydraulic medium to and/or from the hydraulic actuator.

An object of the present invention is also a handling arrangement according to claim 8 for the web rolls and/or reeling shafts of a fiber web machine, comprising at least one a machine element driven by the hydraulic actuator arrangement.

The fiber web is handled with various apparatus of a fiber web machine in many different ways. A fiber web machine and its apparatus require high operation precision and they are also large. Thus the power supply equipment used must very precise but at the same time power requirements can be very high. The power required particularly in the handling of web rolls and reeling shafts (tambour) may be remarkably high. Thus, hydraulic actuators are generally used in fiber web machines and in their various devices as the power supplying apparatus.

In connection with fiber web machines, typically a so-called open system is used, in which the hydraulic medium is transported after the actuator back to a container. According to the system, hydraulic medium is pumped to a higher pressure and fed in a controlled manner to the actuator. In the actuator the hydraulic medium acts and it is returned at a low pressure to the container. In a system like this, a remarkable amount of energy is wasted into heat in the pressure reduction of the hydraulic medium while it is returned from the hydraulic actuator.

EP 0 525 547 A1 discloses a hydraulic control system for an actuator which comprises plurality of branch passages connected in parallel in hydraulic oil passage and a valve is provided in each branch passage. There is a hydraulic cylinder downstream the plurality of branch passages and an accumulator in the passage to restrain any abrupt change in the flow rate when the valves are opened.

DE 10 2006 043628 A1 discloses winding machine with king rolls, and a shaft cradle formed between the rolls. A web roll lies at the cradle during winding of a material web, and a press roll presses against a surface of the roll. A pressing force of the press roller is controlled or regulated by a lever. The lever is actuated by a hydraulic cylinder connected with damping units.

The purpose of this invention is particularly to raise the level of the prior art in the field by providing a hydraulic actuator the energy consumption of which is lower than before.

A particular purpose of the invention is to provide a hydraulic handling system for machine rolls and/or reeling shafts of fiber web machines, the energy consumption of which handling is lower than before.

The hydraulic actuator arrangement comprises at least one hydraulic actuator and a control apparatus for controlling the flow of the hydraulic medium to and/or from the hydraulic actuator. The hydraulic actuator arrangement comprises a pressure-operated energy accumulator unit connected to the hydraulic medium being discharged from the hydraulic actuator. It is characteristic of the invention that the energy accumulator unit Is connected via a digital hydraulic valve device comprising at least two parallel coupled on/off valves in connection with the hydraulic medium. In this way the energy still contained in the hydraulic medium being discharged from the hydraulic medium and/or returned to the container may be recovered for later use.

The hydraulic actuator arrangement preferably comprises an energy accumulator unit connected to the hydraulic medium between the control unit and the hydraulic actuator.

The hydraulic actuator according to an embodiment of the invention is a dual-operational device and the control unit is connected to the hydraulic medium connections of the first and the second side of the hydraulic actuator via a first and a second hydraulic medium duct, to control the flow of the hydraulic medium selectively in a first direction or in a second direction, and there is an energy accumulator unit provided in connection with both the first and the second hydraulic medium duct. The dual-operational hydraulic actuator means here an actuator which is capable of generating effect in two different directions, for example either linearly of rotationally.

According to another embodiment of the invention, the hydraulic actuator is a single-function actuator and the control device is connected to the hydraulic medium connection via a hydraulic medium duct to control the flow of the hydraulic medium selectively in a first direction or in a second direction. There is an energy accumulator unit connected to the hydraulic medium duct of the hydraulic actuator according to the invention.

A hydraulic actuator arrangement according to an embodiment of the invention comprises several hydraulic actuators, each of which has a separately controllable connection to the energy accumulator unit.

The energy accumulator unit has preferably been arranged to be selectively connectable to the hydraulic medium duct. Then the energy accumulator unit has been provided with a control element via which the hydraulic medium duct is selectively connectable to the energy accumulator unit. Preferably the energy accumulator unit is connected via a valve device to be in connection with the hydraulic medium unit.

According to a preferred embodiment the energy accumulator unit is pressure-operated. Then the energy accumulator unit comprises at least one pressure accumulator. The operation of the pressure accumulator may be based on for example a compressing spring or the use of compressing gas. In this case it is favorable that each pressure accumulator is connected via a valve apparatus of its own to be in connection with the hydraulic medium.

According to another preferred embodiment of the invention the energy accumulator unit comprises a hydraulic motor - generator combination, in which the pressure of the hydraulic medium is converted into electric energy. Electric energy may easily be used in other apparatus or in the hydraulic arrangement itself, for example in pressurizing the hydraulic medium.

The pressure-operated energy accumulator unit is according to an embodiment of the invention connected via a digital hydraulic valve into connection with the hydraulic medium. In this way the pressure energy may be recovered more efficiently due to improved possibilities to control the flow.

The objects of the invention are also obtained by means of a hydraulic handling arrangement for web rolls and/or reeling shafts, which comprises at least one machine element driven by the hydraulic actuator arrangement, the hydraulic actuator arrangement comprising at least one arrangement of a hydraulic actuator and a control device provided to guide the flow of the hydraulic medium to and/or from the hydraulic actuator, and the hydraulic actuator arrangement comprising a pressure-operated energy accumulator unit connected into connection with the hydraulic medium being discharged from the hydraulic actuator. It is characteristic of the invention that the hydraulic handling arrangement for web rolls and/or reeling shafts comprises at least one machine element driven by the hydraulic actuator arrangement according to anyone of the claims 1 - 7, and that the machine element has been arranged to operate assisted by the energy from the energy accumulator unit charged by means of the actuator of the machine element. In this way the energy still contained in the hydraulic medium to be discharged from the hydraulic actuator and/or to be returned to the container, may be recovered for use later.

According to an embodiment of the invention, the treatment arrangement for web rolls and/or reeling shafts comprises at least one machine element driven by the hydraulic actuator arrangement, the machine element being arranged to move in a second direction assisted by the energy contained in the energy accumulator unit charged by the machine element while moving in a first direction. In other words, in the arrangement energy is charged in the energy store while the machine element moves in the first direction and the energy charged is discharged, i.e. used to move the machine element in the second direction.

According to another embodiment of the invention, the handling arrangement for web rolls and/or reeling shafts comprises at least two machine elements driven by the hydraulic actuator arrangement, and one of these machine elements is arranged to operate assisted by the energy contained in the energy accumulator unit charged by actuator of the first machine element.

Other embodiments of the invention are described in the appended patent claims and the description of the drawings.

A hydraulic actuator arrangement refers in this context to an arrangement where a suitable fluid serves as the hydraulic medium, such as a liquid (oil, water, a mixture of water and antifreeze agent) an emulsion of liquid and gas, a gas etc. A hydraulic medium thus means a fluid suitable for a hydraulic actuator arrangement, such as a liquid (oil, water, a mixture of water and antifreeze agent) an emulsion of liquid and gas, a gas, a mixture of liquid and solid, and a mixture of gas and solid etc.

The solution according to the invention may be employed in a fiber web machine at many points. Particularly in the handling of machine rolls, transfers and lowering/lifting movements of rolls and empty reeling shafts are performed constantly, where the energy consumption may be remarkably reduced by using the solution according to the invention.

A hydraulic arrangement yields great powers and moments with relatively small and light apparatus. Other advantages are for example:
- easy production of a linear movement and a rotating movement
- easy control of power, moment and velocity possibility to transfer power, energy even in a flexible hose
- hydraulic medium is almost incompressible, thus producing an accurate control of movement.

The invention and its operation are described in the following with reference to the accompanying schematic drawings figure of which
Fig. 1 illustrates a hydraulic actuator arrangement according to an embodiment of the invention,
Fig. 2 illustrates a hydraulic actuator arrangement according to another embodiment of the invention,
Fig. 3 illustrates a hydraulic actuator arrangement according to yet another embodiment of the invention,
Fig. 4 illustrates schematically the connection of an energy store to a hydraulic arrangement according to an embodiment of the invention, and
Fig. 5 illustrates schematically a hydraulic actuator arrangement according to yet another embodiment of the invention.

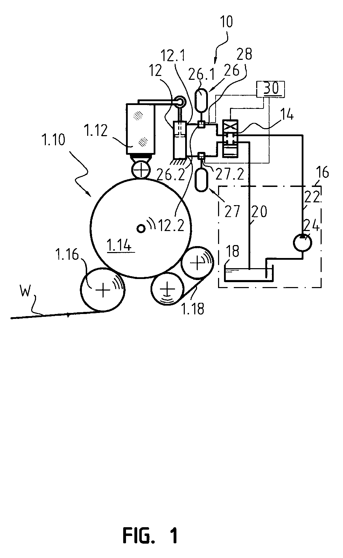

In the embodiment of Figure 1 illustrates schematically a hydraulic actuator arrangement 10 according to the invention in connection with the handling arrangement of the web rolls and/or reeling shafts of a fiber web machine. In the embodiment of Fig. 1, the fiber web machine is the winding section 1.10 of a slitter winder for winding so-called customer rolls 1.14. Here, there is a hydraulic actuator arrangement 10 provided in connection with a press roll beam 1.12 of the winding section 1.10 by means of which the set of rolls to be wound may be supported and/or loaded from one direction. The winding section 1.10 is here a so-called carrier roll winder where the set of rolls wound from partial webs W is wound in support of a carrier roll 1.16 and belt rolls 1.18. Naturally the belt rolls may be another carrier roll.

In the embodiment of Fig. 1, the hydraulic actuator arrangement 10 used as the power device for unloading or loading of the set of rolls comprises at least a hydraulic actuator 12 such a as a hydraulic cylinder. In connection with the hydraulic cylinder 12, there is a control device 14, such as a directional control valve 14 know as such, a servo valve, an analogy valve, a digital valve group or a corresponding device by means of which the flow of the hydraulic medium to the hydraulic actuator may be controlled. The control device 14 is connected to a hydraulic arrangement 16 which in this figure has been illustrated schematically to comprise a container 18, a return duct 20 for the hydraulic medium, a feed duct 22 for the hydraulic medium, and a pressure raising pump 24 in connection with the hydraulic medium feed duct. The hydraulic arrangement has been arranged to produce hydraulic medium at work pressure to the feed duct and to receive hydraulic medium used in the actuator for forwarding it pressurized further back to the feed duct.

The hydraulic actuator arrangement 10 comprises at least one energy accumulator unit 26 connected to be in connection with the hydraulic medium duct to or from the hydraulic actuator 12. In the example of Fig. 1 when using a carrier roll winder the roll set 1.14 is formed around the winding core of each roll whereby the diameter of the rolls increase and they push the press roll beam 1.12 away from the press rolls 1.16, 1.18. Then also the pressure of the hydraulic medium discharged through the hydraulic medium connection 12.1 of the hydraulic actuator, i.e. the first side of the hydraulic cylinder, may be raised by means of the movement of the piston of the hydraulic cylinder. The energy accumulator unit 26 provided in the hydraulic medium duct 28 for the hydraulic medium connection 12.1 comprises in the embodiment of Fig. 1 a pressure accumulator 26.1 serving as an energy store. The pressure accumulator is selectively connectable to be in connection with the hydraulic medium. In order to accomplish this, the energy accumulator unit 26 comprises a control member 26.2 via which the hydraulic medium duct is selectively connectable to the pressure accumulator 26.1. The control member 26.2 preferably also has an effect on the flow connection between the actuator 12 and the control device 14 for example like an adjustable throttle means. In the embodiment of Fig. 1, there is also in connection with the second side of the hydraulic medium connection 12.2 of the hydraulic actuator 12, i.e. the hydraulic cylinder, an energy accumulator unit 27 connected and working in the corresponding way, which for this reason is not described here more in detail.

The arrangement according to Fig. 1 is carried out so that, when using a carrier roll winder, the roll set 1.14 is formed around the winding core of each roll, whereby the diameter of the rolls of the set grows and the rolls push the press roll beam 1.12 away from the carrier rolls 1.16, 1.18. At the same time, as the rolls grow, hydraulic medium is discharged from the hydraulic medium connection 12.1 of the first side of the hydraulic cylinder. Now, hydraulic medium is guided to the energy accumulator unit 26 provided in connection with the hydraulic medium discharged from the hydraulic actuator so that at least a part of the pressure raise of the hydraulic medium caused by the movement of the press roll beam 1.12 is stored in the energy accumulator unit 26, here a pressure accumulator 26.1. When the pressure roll beam is driven the next time down towards the carrier rolls 1.16, 1.18, the pressure stored in the energy accumulator unit 26 is unloaded to the hydraulic actuator to drive it. The method preferably further includes a control of the force directed by the pressure roll of the press roll beam 1.12 to the web rolls so that the force directed to the web rolls is maintained in a predetermined value or range.

According to a preferred embodiment of the invention, while the press roll beam is driven down, the eventual excess pressure available at the pressure medium connection 12.2 side at the second side of the hydraulic cylinder is guided to be stored in a second energy accumulator unit 27 in connection therewith. This is preferably done during a set change when full customer rolls have removed from the winder and the press roll beam is lowered down to the new winding cores. The pressure in the second energy accumulator unit is used in a corresponding way to drive the hydraulic actuator 12 to move the press roll beams away from the carrier rolls 1.16, 1.18. Thus, in the embodiment of Fig. 1, the energy stored from the work of the hydraulic actuator in one direction may be used for the work of the same actuator in the other direction.

The arrangement preferably further comprises a control unit 30 to guide the operation of the control device 14 and the control members 26.2, 27.2 so that the consumption of the pressurized hydraulic medium produced by the hydraulic arrangement 16 when connected is minimized.

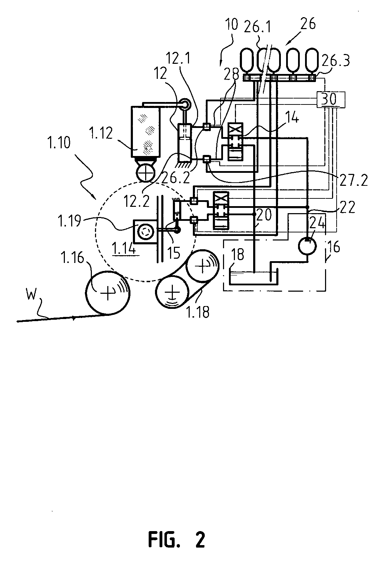

Figure 2 illustrates another embodiment of the invention where the hydraulic actuator arrangement 10 is provided in connection with the winding section 1.10 of a fiber web slitter winder. The elements corresponding to the ones in Figure 1 have been referred to by the same reference numbers as in Figure 1. In this embodiment the difference compared with the embodiment in Figure 1 is the structure of the energy store 26 and also its connection to hydraulic arrangement. Also here, like in the embodiment of Figure 1, the hydraulic actuator 12 in connection with the press roll beam 1.12 comprises a control device 14 by means of which the flow of hydraulic medium to the hydraulic actuator may be regulated. Also in this embodiment the energy accumulator unit 26 of the hydraulic actuator arrangement is connected to the hydraulic medium duct 28 extending from/to the hydraulic actuator 12. The energy accumulator unit 26.1 of Figure 2 comprises a number of pressure accumulators 26.1 connected parallel to each other. Each pressure accumulator is selectively connectable to the hydraulic medium with a valve apparatus 26.3 of its own. The valve apparatus is preferably a digital hydraulic valve. The energy store preferably comprises pressure accumulators having different properties, at least different storage capacity. Then, when using the energy store, the pressure accumulator/s of the energy store having the pressure storing capacity/capacities suitable for the pressure of the hydraulic medium prevailing in the hydraulic medium duct may be used for storing or discharging the hydraulic medium for use in the hydraulic actuator.

The energy store 26 of Figure 2 is in connection with more than one hydraulic actuator 12, 15. In Figure 2 the other hydraulic actuator 15 is connected to a core lock 1.19 of the carrier roll winder 1.10, by means of which the roll set is supported at its end during the winding. In the embodiment according to Figure 2, the procedure is according to a preferred embodiment of the invention preferably such that when using the carrier roll winder the rolls of set 1.14 are formed around each winding core, whereby the diameter of the rolls of the set grows during the winding and the rolls push the press roll beam 1.12 away from the carrier rolls 1.16, 1.18. While the rolls grow hydraulic medium is discharged through the hydraulic medium connection 12.1 at the first side of the hydraulic cylinder. According to an embodiment, hydraulic medium is led to at least one pressure accumulator 26.1 of the energy accumulator unit 26 arranged to be in connection with the hydraulic medium discharged in duct 28 from the hydraulic actuator so that at least a part of the pressure increase of the hydraulic medium caused by the movement of the pressure roll beam 1.12 is stored in the pressure accumulators 26.1 of the energy store 26. When the pressure accumulator is partly or fully charged the connection of that pressure accumulator to the hydraulic medium duct 28 is disconnected and, if the winding has not been finished yet, a connection to another pressure accumulator 26.1 of the energy accumulator unit 26 is opened. Alternatively, hydraulic medium may be fed into several pressure accumulators 26.1 simultaneously. As pressure accumulators may have different properties the pressure accumulator/s may be chosen so that the charge or charge capacity of the accumulator corresponds to the requirement at that time.

When the winding proceeds, i.e. while the diameter of the rolls increase also the core lock mentioned is moved determined by the movement of the center of the roll set, by means of the second hydraulic actuator 15. According to another embodiment the hydraulic medium pressure increase created by the pressure roll beam 1.12 is used to move the second hydraulic actuator (of the core lock) in the way described above. According to another embodiment of the invention the energy stored during the lowering of the press roll towards the carrier rolls is guided to move the core lock by means of the hydraulic actuator while the winding proceeds. Thus, energy is recovered to an energy accumulator unit while the press roll beam is driven down. This stored energy is used to move the core lock by means of a hydraulic actuator while the subsequent of later winding progresses, essentially following the position of the center of the rolls.

According to another embodiment of the invention, simultaneously when a pressure accumulator is charged with the pressure medium from a first actuator 12, pressure medium is discharged to another actuator 15 from another pressure accumulator which has been charged earlier with pressure medium discharged from the first actuator 12.

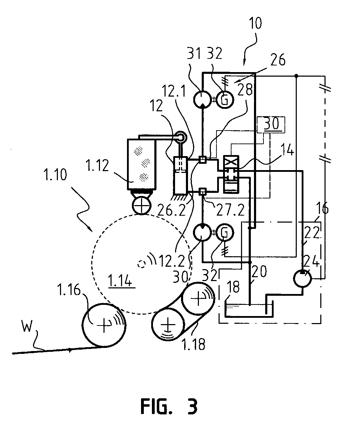

Figure 3 illustrates yet another embodiment of the invention where the hydraulic actuator arrangement 10 has been provided in connection with the winding section 1.10 of a fiber web slitter winder. The elements corresponding to the ones in Figure 1 have been referred to with the same reference numbers as in Figure 1. In the embodiment of Figure 3 the energy stores 26, 27 have been carried out in a different way than in Figure 1. Here the energy stores 26, 27 comprise an arrangement including a hydraulic motor 31 and a generator 32, where hydraulic medium flowing from the hydraulic actuator 12 is taken via the hydraulic motor which thus works for a generator to produce electric energy. Electric energy may be stored in known ways and/or used for example to drive the pump 24. Thus, the possibilities to use the energy recovered from the hydraulic medium in this way as electric energy are extremely vast.

According to an embodiment of the invention the energy stores 26, 27 comprise an arrangement including a hydraulic motor 31 and a hydraulic pump and/or a generator 32.

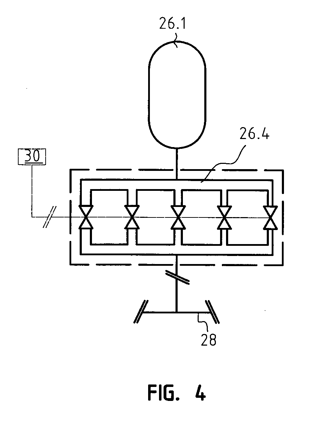

Figure 4 is a more detailed illustration of an embodiment of the invention for connecting pressure accumulators serving as an energy store to a hydraulic arrangement. A pressure accumulator 26.1 of a hydraulic actuator arrangement according to the invention is connected to a duct 28 via a valve device 26.4 comprising at least two parallel-coupled on/off valves. The embodiment of the Figure illustrates five such valves. Each valve may be opened and closed independently guided by a control valve 30. An arrangement of this kind may also be called a digital hydraulic valve device. This kind of a valve device allows efficient transfer of the hydraulic medium at the pressure of the hydraulic medium duct to a pressure accumulator 26.1 for use later. Figure 4 further illustrates an embodiment in which at least two parallel on/off valves have a different cross-sectional flow diameter which further improves the performance of the valve device particularly in view of controllability. A digital hydraulic valve of the kind illustrated in Figure 4 is advantageously applied also in the energy accumulator unit comprising several pressure accumulators illustrated in Figure 2 so that each valve device 26.3 of the pressure accumulators 26.1, each individual pressure accumulator being selectively connectable to be in contact with the hydraulic medium, is a digital hydraulic valve.

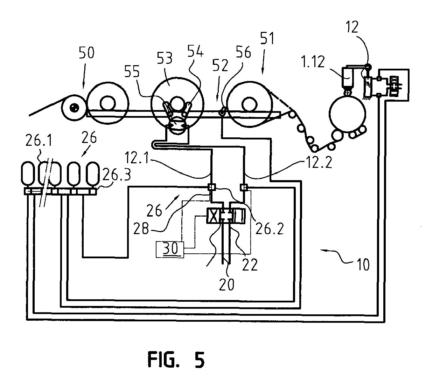

Figure 5 illustrates yet another embodiment of the invention. It presents for example transfer rails 52 between a winder 50 of a fiber web machine and an unwinder 51 of an after-treatment apparatus, along which a machine roll 53 may be transferred in a controlled manner from the winder to the unwinder. Typically the transfer rails lie in a direction slightly deviating from horizontal, whereby gravitation causes the machine roll to roll down on the rails. In order to guide the movement of the machine roll in a control manner the machine roll to be transferred is guided by a transfer device 54. The transfer device comprises a hydraulic actuator 55 by means of which the movement of the transfer device 54 and the machine roll 53 on the rails guided by it may be controlled. The rails slant slightly downwards in the direction from the winder to the unwinder so that the transfer of the machine roll from the winder to the unwinder requires mainly slowing down the movement in order to resist the gravitational force. The hydraulic actuator 55 is a part of the hydraulic actuator arrangement 10 according to the invention where the hydraulic actuator arrangement comprises an energy accumulator unit 26 connected to the hydraulic medium discharged from the hydraulic actuator. Then the high pressure of the hydraulic medium generated by the actuator in the deceleration of the movement needed in the transfer of a machine roll weighing up to 100 t may be stored by means of the energy accumulator unit. The transfer device may be returned from the unwinder to the winder by using the pressure stored earlier. As the transfer device is returned empty or with an empty reeling shaft, less energy is consumed in the return than was stored in the transfer of the full roll, the excess energy may be used in other hydraulic actuators of the fiber web machine. This embodiment is an example of a method where the energy of the hydraulic medium is stored in connection with one part of a fiber web machine while the gravitational force works during handling of a web roll/winding core, in other words when moving it from a horizontal level to a lower level and the energy stored in this way is used in other hydraulic actuators of the fiber web machine.

According to an embodiment, a roll stopper 56 serving as a hydraulic actuator in connection with the rails 52, the actuator comprising a hydraulic medium pump, for example a cylinder, which is a part of the hydraulic actuator arrangement 10 of the invention, the hydraulic actuator arrangement comprising an energy accumulator unit 26 connected to the hydraulic medium discharged from the hydraulic actuator. When the machine roll is run or is allowed to roll down against the stopper 56 the stopping work is transformed into pressure of the hydraulic medium, which is stored in the energy accumulator unit 26 for use in the other hydraulic actuators 12 of the arrangement.

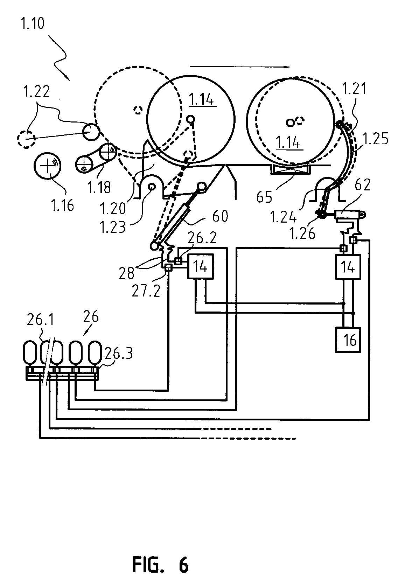

A web roll treatment arrangement according to an embodiment of the invention has been presented in Figure 6. The numbering of the elements in Figure 6 corresponds to the numbering of corresponding elements in the other drawing figures. The Figure illustrates the winding section 1.10 of a fiber web slitter winder, a carrier roll winder and in connection with it a turning device 1.20 for the treatment of web rolls, and a stopper 1.21 illustrated in a phase where rolls 1.14 are removed. The winding section 1.10 comprises a roll removing device 1.22 with which the roll set is pushed over the apex of the belt rolls 1.18 or the carrier roll to the turning device 1.20. The turning device is turned around its articulation point 1.23 guided by a hydraulic actuator 60 connected thereto. The articulation point 1.23 and the hydraulic actuator have been provided in connection with the turning device so that during the turning movement of the roll set the hydraulic actuator directs to the turning device a force resisting the gravitational force for the majority of the duration of the movement. Then the work performed by the gravitational force may be stored to at least one energy accumulator unit 26 disposed in connection with the hydraulic actuator 60, as has been illustrated in Figure 2 to take place in connection with the use of the press roll beam. In Figure 6 the turning device has been illustrated with a dashed line in the position receiving the roll set and with a solid line in the position releasing the roll set. In connection with the slitter winder, there is also a roll conveyor 65, onto which the rolls are released from the turning device 1.20 so that the rolls are allowed to roll from the turning device to the conveyor where they are stopped with a stopper 1.21. The stopper has been illustrated here by way of an example as having a certain structure and it is clear that the same function may be obtained with different technical solutions. Here the stopper comprises two levers 1.25, 1.26 extending from the articulation point 1.24, one of which, 1.25, has been arranged in connection with the roll conveyor 65 so that the arriving rolls will hit the stopper with the consequence that it turns around the articulation point 1.24. The other lever 1.26 has in this embodiment been connected to the hydraulic actuator 62, whereby the turning mentioned above results in the movement of the second lever 1.26 as well and thus also the movement of the hydraulic actuator. During the stopping action of the roll set the hydraulic actuator directs to the stopper the force to receive the roll set. Then the work performed by the kinetic energy may be stored to at least one energy accumulator unit 26 disposed in connection with the hydraulic actuator 60, in a corresponding way as has been illustrated in Figure 2 to take place in connection with the use of the press roll beam. The energy recovered in this way may be used in the hydraulic actuators of the fiber web machine. In Figure 6 the stopper has been illustrated with a dashed line at the moment of receiving the roll set and with a solid line when the roll set lies on the conveyor after the rolls have been stopped.

As an alternative to the stopper arrangement illustrated in Figure 6 the stopper itself may be gas-operated, whereby the kinetic energy of the roll set transferred to gas pressure in the stopping action is preferably transformed into hydraulic arrangement pressure by means of a transformer intended for that purpose, such a piston device.

It must be understood that only a few most preferred embodiments of the invention have been presented above. Thus it is obvious that the invention is not limited to the embodiments disclosed above but may be modified in many ways within the scope of protection defined by the appended patent claims. The features described in conjunction with the different embodiments may be used in conjunction with other embodiments as well and/or various combinations of the described features may be made within the frame of the basic idea of the invention, if so desired and if technical feasibility for this exists.

## Claims

1. A hydraulic actuator arrangement (10), including a hydraulic actuator (12, 15, 55, 56) and a control device (14) to control the flow of hydraulic medium to and/or from the hydraulic actuator, the hydraulic actuator arrangement (10) including a pressure-operated energy accumulator unit (26, 27) connected to the hydraulic medium discharged from the hydraulic actuator, **characterized in that** the energy accumulator unit is connected by means of a digital hydraulic valve device (26.4) comprising at least two parallel coupled on/off valves in connection with the hydraulic medium.

2. A hydraulic actuator arrangement according to claim 1, **characterized in that** the hydraulic actuator arrangement includes a energy accumulator unit (26, 27) connected to the hydraulic medium between the control device (14) and the hydraulic actuator (12, 15, 55, 56).

3. A hydraulic actuator arrangement according to claim 1, **characterized in that** the hydraulic actuator (12, 15, 55) is a dual-operational actuator and that the control device is connected to the hydraulic medium connections (12.1, 12.2) of the first and the second side of the hydraulic actuator via a first and a second hydraulic medium duct (28) to control the flow of the hydraulic medium selectively in a first direction or a second direction, and that an energy accumulator unit (26, 27) has been provided in connection with both the first and the second hydraulic medium duct (28).

4. A hydraulic actuator arrangement according to claim 1 or 2,
**characterized in that** the hydraulic actuator arrangement (10) includes several hydraulic actuators (12,15, 55, 56).

5. A hydraulic actuator arrangement according to claim 1 or 2, **characterized in that** the energy accumulator unit has been provided to be selectively connected (26.2, 27.2) to the hydraulic medium duct (28).

6. A hydraulic actuator arrangement according to claim 1, **characterized in that** the energy accumulator unit (26, 27) includes at least one pressure accumulator (26.1).

7. A hydraulic actuator arrangement according to claim 1, **characterized in that** the energy accumulator unit (26, 27) includes a hydraulic motor - generator (31, 32), where the pressure of the hydraulic medium is transformed into electric energy.

8. A treatment arrangement for fiber web machine web rolls and/or reeling shafts, including at least one machine element (1.12, 1.19) driven by a hydraulic actuator arrangement (10), the hydraulic actuator arrangement (10) including a hydraulic actuator (12, 15, 55, 56) and a control device (14) to control the flow of the hydraulic medium to and/or from the hydraulic actuator, and the hydraulic actuator arrangement (10) including a pressure-operated energy accumulator unit (26, 27) connected to the hydraulic medium discharged from the hydraulic actuator, wherein in that the treatment arrangement for fiber web machine
web rolls and/or reeling shafts includes at least one machine element (1.12, 1.19) driven by the hydraulic actuator arrangement according to anyone of the preceding claims 1 - 7 and that the machine element (1.12, 1.19) is arranged to be driven by means of the energy contained in the energy accumulator unit charged by the hydraulic actuator (12) of the machine element (1.12, 1.19).

9. A treatment arrangement for fiber web machine web rolls and/or reeling shafts according to claim 8, **characterized in that** the treatment arrangement for fiber web machine web rolls and/or reeling shafts includes at least one machine element (1.12, 1.19) driven by the hydraulic actuator arrangement and that the machine element (1.12, 1.19) is arranged to move in a second direction assisted by the energy contained in the energy accumulator unit charged by the machine element (1.12, 1.19) actuator (12) while moving in the first direction.

10. A treatment arrangement for fiber web machine web rolls and/or reeling shafts according to claim 8, **characterized in that** the treatment arrangement for fiber web machine web rolls and/or reeling shafts includes at least two machine elements (1.12, 1.19) driven by the hydraulic actuator arrangement, and that one (1.19) of these machine elements is provided to be driven assisted by the energy in the energy accumulator unit charged by the actuator (12) of the machine element (1.12).

## Patentansprüche

1. Hydraulische Stellantriebsanordnung (10), die einen hydraulischen Stellantrieb (12, 15, 55, 56) und ein Steuergerät (14) zum Regeln des Stroms eines Hydraulikmediums zu und/oder von dem hydraulischen Stellantrieb einschließt, wobei die hydraulische Stellantriebsanordnung (10) eine druckbetriebene Energiesammlereinheit (26, 27) einschließt, die mit dem aus dem hydraulischen Stellantrieb abgegebenen Hydraulikmedium verbunden ist, **dadurch gekennzeichnet, dass** die Energiesammlereinheit mit Hilfe einer digitalen Hydraulikventileinrichtung (26.4), die wenigstens zwei parallele gekoppelte Schaltventile in Verbindung mit dem Hydraulikmedium umfasst, verbunden ist.

2. Hydraulische Stellantriebsanordnung nach Anspruch 1, **dadurch gekennzeichnet, dass** die hydraulische Stellantriebsanordnung eine Energiesammlereinheit (26, 27) umfasst, die mit dem Hydraulikmedium zwischen dem Steuergerät (14) und dem hydraulischen Stellantrieb (12, 15, 55, 56) verbunden ist.

3. Hydraulische Stellantriebsanordnung nach Anspruch 1, **dadurch gekennzeichnet, dass** der hydraulische Stellantrieb (12, 15, 55) ein Doppelbetriebsstellantrieb ist und dass das Steuergerät über eine erste und eine zweite Hydraulikmedium-Leitung (28) mit den Hydraulikmedium-Verbindungen (12.1, 12.2) der ersten und der zweiten Seite des hydraulischen Stellantriebs verbunden ist, um den Strom des Hydraulikmediums selektiv in einer ersten Richtung oder einer zweiten Richtung zu regeln, und dass die Energiesammlereinheit (26, 27) in Verbindung mit sowohl der ersten als auch der zweiten Hydraulikmedium-Leitung (28) bereitgestellt worden ist.

4. Hydraulische Stellantriebsanordnung nach Anspruch 1 oder 2, **dadurch gekennzeichnet, dass** die hydraulische Stellantriebsanordnung (10) mehrere hydraulische Stellantriebe (12, 15, 55, 56) einschließt.

5. Hydraulische Stellantriebsanordnung nach Anspruch 1 oder 2, **dadurch gekennzeichnet, dass** die Energiesammlereinheit dafür bereitgestellt worden ist, selektiv mit der Hydraulikmedium-Leitung (28) verbunden (26.2, 27.2) zu werden.

6. Hydraulische Stellantriebsanordnung nach Anspruch 1, **dadurch gekennzeichnet, dass** die Energiesammlereinheit (26, 27) wenigstens einen Drucksammler (26.1) einschließt.

7. Hydraulische Stellantriebsanordnung nach Anspruch 1, **dadurch gekennzeichnet, dass** die Energiesammlereinheit (26, 27) einen hydraulischen Motor-Generator (31, 32) einschließt, in dem der Druck des Hydraulikmediums in Elektroenergie umgeformt wird.

8. Behandlungsanordnung für Bahnwalzen und/oder Wickelwellen von Faserstoffbahnmaschinen, die wenigstens ein Maschinenelement (1.12, 1.19) einschließt, das durch eine hydraulische Stellantriebsanordnung (10) angetrieben wird, wobei die hydraulische Stellantriebsanordnung (10) einen hydraulischen Stellantrieb (12, 15, 55, 56) und ein Steuergerät (14) zum Regeln des Stroms eines Hydraulikmediums zu und/oder von dem hydraulischen Stellantrieb einschließt und die hydraulische Stellantriebsanordnung (10) eine druckbetriebene Energiesammlereinheit (26, 27) einschließt, die mit dem aus dem hydraulischen Stellantrieb abgegebenen Hydraulikmedium verbunden ist, wobei die Behandlungsanordnung für Bahnwalzen und/oder Wickelwellen von Faserstoffbahnmaschinen wenigstens ein Maschinenelement (1.12, 1.19) einschließt, das durch die hydraulische Stellantriebsanordnung nach einem der vorhergehenden Ansprüche 1 bis 7 angetrieben wird, und das Maschinenelement (1.12, 1.19) dafür angeordnet ist, mit Hilfe der Energie angetrieben zu werden, die in der Energiesammlereinheit enthalten ist, die durch den hydraulischen Stellantrieb (12) des Maschinenelements (1.12, 1.19) geladen wird.

9. Behandlungsanordnung für Bahnwalzen und/oder Wickelwellen von Faserstoffbahnmaschinen nach Anspruch 8, **dadurch gekennzeichnet, dass** die Behandlungsanordnung für Bahnwalzen und/oder Wickelwellen von Faserstoffbahnmaschinen wenigstens ein Maschinenelement (1.12, 1.19) einschließt, das durch die hydraulische Stellantriebsanordnung angetrieben wird, und dass das Maschinenelement (1.12, 1.19) dafür angeordnet ist, sich in einer zweite Richtung zu bewegen, unterstützt durch die Energie, die in der Energiesammlereinheit enthalten ist, die durch den hydraulischen Stellantrieb (12) des Maschinenelements (1.12, 1.19) geladen wird, während es sich in der ersten Richtung bewegt.

10. Behandlungsanordnung für Bahnwalzen und/oder Wickelwellen von Faserstoffbahnmaschinen nach Anspruch 8, **dadurch gekennzeichnet, dass** die Behandlungsanordnung für Bahnwalzen und/oder Wickelwellen von Faserstoffbahnmaschinen wenigstens zwei Maschinenelemente (1.12, 1.19) einschließt, die durch die hydraulische Stellantriebsanordnung angetrieben werden, und dass eines (1.19) dieser Maschinenelemente dafür bereitgestellt wird, unterstützt durch die Energie in der Energiesammlereinheit, die durch den Stellantrieb (12) des Maschinenelements (1.19) geladen wird, angetrieben zu werden.

## Revendications

1. Agencement de déclencheur hydraulique (10), comprenant un déclencheur hydraulique (12, 15, 55, 56) et un dispositif de commande (14) pour commander l'écoulement du fluide hydraulique vers et/ou depuis le déclencheur hydraulique, l'agencement de déclencheur hydraulique (10) comprenant une unité d'accumulateur d'énergie actionnée par pression (26, 27), reliée au fluide hydraulique déchargé du déclencheur hydraulique, **caractérisé en ce que** l'unité d'accumulateur d'énergie est reliée au moyen d'un dispositif de soupape hydraulique numérique (26.4) comprenant au moins deux soupapes marche/arrêt couplées en parallèle en liaison avec le fluide hydraulique.

2. Agencement de déclencheur hydraulique selon la revendication 1, **caractérisé en ce que** l'agencement de déclencheur hydraulique comprend une unité d'accumulateur d'énergie (26, 27) reliée au fluide hydraulique entre le dispositif de commande (14) et l'actionneur hydraulique (12, 15, 55, 56).

3. Agencement de déclencheur hydraulique selon la revendication 1, **caractérisé en ce que** l'actionneur hydraulique (12, 15, 55) est un actionneur à double commande et que le dispositif de commande est relié aux connexions de fluide hydraulique (12.1, 12.2) des premier et second côtés du déclencheur hydraulique via des premier et second tuyaux de fluide hydraulique (28) pour commander l'écoulement du fluide hydraulique de manière sélective dans une première direction ou une seconde direction, et **en ce qu'**une unité d'accumulateur d'énergie (26, 27) a été prévue en liaison avec à la fois le premier tuyau et le second tuyau de fluide hydraulique (28).

4. Agencement de déclencheur hydraulique selon la revendication 1 ou 2, **caractérisé en ce que** l'agencement de déclencheur hydraulique (10) comprend plusieurs déclencheurs hydrauliques (12, 15, 55, 56).

5. Agencement de déclencheur hydraulique selon la revendication 1 ou 2, **caractérisé en ce que** l'unité d'accumulateur d'énergie a été prévue pour être reliée de manière sélective (26.2, 27.2) au tuyau de fluide hydraulique (28).

6. Agencement de déclencheur hydraulique selon la revendication 1, **caractérisé en ce que** l'unité d'accumulateur d'énergie (26, 27) comprend au moins un accumulateur de pression (26.1).

7. Agencement de déclencheur hydraulique selon la revendication 1, **caractérisé en ce que** l'unité d'accumulateur d'énergie (26, 27) comprend un générateur-moteur hydraulique (31, 32) où la pression du fluide hydraulique est transformée en énergie électrique.

8. Agencement de traitement pour des rouleaux de bande de machines à bande fibreuse et/ou d'arbres d'enroulement, comprenant au moins un élément de machine (1.12, 1.19) entraîné par un agencement de déclencheur hydraulique (10), l'agencement de déclencheur hydraulique (10) comprenant un déclencheur hydraulique (12, 15, 55, 56) et un dispositif de commande (14) pour commander l'écoulement du fluide hydraulique vers et/ou depuis le déclencheur hydraulique, et l'agencement de déclencheur hydraulique (10) comprenant une unité d'accumulateur d'énergie actionnée par pression (26, 27), reliée au fluide hydraulique déchargé du déclencheur hydraulique, sachant que l'agencement de traitement pour les rouleaux de bande de machines à bande fibreuse et/ou arbres d'enroulement comprend au moins un élément de machine (1.12, 1.19) entraîné par l'agencement de déclencheur hydraulique selon l'une quelconque des revendications précédentes 1 - 7 et que l'élément de machine (1.12, 1.19) est agencé pour être entraîné au moyen de l'énergie contenue dans l'unité d'accumulateur d'énergie chargée par le déclencheur hydraulique (12) de l'élément de machine (1.12, 1.19).

9. Agencement de traitement pour des rouleaux de bande de machines à bande fibreuse et/ou d'arbres d'enroulement selon la revendication 8, **caractérisé en ce que** l'agencement de traitement pour les rouleaux de bande de machines à bande fibreuse et/ou arbres d'enroulement comprend au moins un élément de machine (1.12, 1.19) entraîné par l'agencement de déclencheur hydraulique et que l'élément de machine (1.12, 1.19) est agencé pour se déplacer dans une seconde direction assisté par l'énergie contenue dans l'unité d'accumulateur d'énergie chargée par le déclencheur (12) de l'élément de machine (1.12, 1.19) tout en se déplaçant dans la première direction.

10. Agencement de traitement pour des rouleaux de bande de machines à bande fibreuse et/ou d'arbres d'enroulement selon la revendication 8, **caractérisé en ce que** l'agencement de traitement pour les rouleaux de bande de machines à bande fibreuse et/ou arbres d'enroulement comprend au moins deux éléments de machine (1.12, 1.19) entraînés par l'agencement de déclencheur hydraulique et que l'un (1.19) de ces éléments de machine est prévu pour être entraîné en étant assisté par l'énergie dans l'unité d'accumulateur d'énergie chargée par le déclencheur hydraulique (12) de l'élément de machine (1.12).
